# EUROPÄISCHE PATENTSCHRIFT

(11) **EP 3 051 771 B1**
(45) Veröffentlichungstag und Bekanntmachung des Hinweises auf die Patenterteilung: **03.10.2018**
(21) Anmeldenummer: 16000191.3
(22) Anmeldetag: 26.01.2016
(51) Int. Cl.: H04L 29/06, H04W 12/04, H04W 4/00, H04W 8/18, H04W 8/20, G06F 21/53, G06F 21/74

(54) **VERFAHREN ZUM ENTSPERREN EINES MOBILEN ENDGERÄTES**
METHOD FOR UNLOCKING A MOBILE TERMINAL
PROCEDE DE DEVERROUILLAGE D'UN TERMINAL MOBILE

(30) Priorität: 29.01.2015 DE 102015001107
(43) Veröffentlichungstag der Anmeldung: 03.08.2016
(73) Patentinhaber: Giesecke+Devrient Mobile Security GmbH, 81677 München (DE)
(72) Erfinder: Auer, Martin, 84076 Pfeffenhausen (DE)

(56) Entgegenhaltungen:
- EP-A1- 1 659 810
- WO-A1-2013/158971
- DE-A1-102012 011 729
- DE-A1-102013 004 609
- US-A1- 2013 205 134

## Beschreibung

Die Erfindung betrifft ein Verfahren zum Entsperren eines mobilen Endgerätes durch einen Server eines Mobilfunknetzwerks.

Im Auslieferungszustand weisen mobile Endgeräte in der Regel eine SIM-Sperre auf, die die Nutzbarkeit des mobilen Endgeräts auf bestimmte SIM-Karten beschränkt. Dadurch soll sichergestellt werden, dass ein Käufer, der ein Endgerät zu einem von einem Netzwerkbetreiber subventionierten Preis erwirbt, das Endgerät für einen bestimmten Zeitraum nur zugunsten des Netzwerkbetreibers nutzt. Dagegen soll in anderen Fällen, beispielsweise wenn der Käufer das Endgerät zu einem regulären Preis erwirbt, das mobile Endgerät beim Kauf entsperrt und für alle SIM-Karten nutzbar gemacht werden.

Zu diesem Zweck muss in der Regel das neue mobile Endgerät geöffnet und vorübergehend eine SIM-Karte eingelegt werden. Das mobile Endgerät stellt eine Verbindung mit dem zur SIM-Karte gehörenden Netz-Betreiber her. Über die Verbindung kann das mobile Endgerät entsperrt werden. Dieser Vorgang ist am Verkaufsort, d.h. ein einem Ladengeschäft, sehr aufwändig. Zudem könnte die Verwendung einer beliebigen SIM-Karte unter Umständen mit hohen Kosten verbunden. Alternativ könnte das mobile Endgerät über eine Internetverbindung entsperrt werden. Dazu wird das mobile Endgerät mit einem WLAN (Wireless LAN; drahtloses Netzwerk) des Ladengeschäfts verbunden. Das mobile Endgerät muss entsprechend dem Zugang des WLAN aufwändig konfiguriert werden. Über das WLAN ist das mobile Endgerät mit dem Internet verbunden und kann entsperrt werden. Beide Möglichkeiten sind umständlich, dauern verhältnismäßig lange und werden vom Kunden beim Kauf eines neuen Geräts wenig akzeptiert. Zudem ist führt die Konfiguration über das WLAN des Ladengeschäfts zu einer Herausgabe von Zugangsdaten zum WLAN des Ladengeschäfts, was für das Ladengeschäft eine Unsicherheit bedeutet.

Die Druckschrift DE 10 2008 017 630 A1 beschreibt ein Verfahren zur vereinfachten Authentisierung mittels einer in einem mobilen
Telekommunikationsgerät angeordneten Chipkarte.

EP 1 659 810 A1 beschreibt ein Verfahren zum Aktualisieren / Wiederherstellen eines Konfigurationsparameters eines mobilen Terminals, auf dem ein öffentlicher Schlüssel eines Verschlüsselungssystems und ein Terminalidentifizierer gespeichert sind.

WO 2013/158971 A1 beschreibt Verfahren zum Entscheiden, ob Funktionen eines Telekommunikationsgeräts entsperrt werden, basierend auf einer oder mehreren Vorgaben.

DE 10 2012 011 729 A1 beschreibt eine Mobilstation mit einem Endgerät und mit einem im Endgerät betreibbaren Sicherheitselement,
wobei in dem Sicherheitselement ein Geheimschlüssel gespeichert ist
und in einer gesicherten Laufzeitumgebung im Endgerät ein dem Geheimschlüssel entsprechender Verifizierungsschlüssel gespeichert ist,
und wobei in dem Sicherheitselement weiter ein Nutzungstoken gespeichert ist, durch welches der Betriebsumfang, in dem das Endgerät zusammen mit dem Sicherheitselement betreibbar ist, zumindest teilweise festgesetzt ist.

EP 10 2013 004 609 A1 beschreibt ein Verfahren zum Laden von Subskriptionsdaten von einem Server eines Mobilfunknetzwerks in ein
Teilnehmeridentitätsmodul einer Mobilstation, die ein mobiles Endgerät
und das Teilnehmeridentitätsmodul umfasst.

US 2013/205 134 A1 beschreibt Verfahren und Vorrichtungen zur Zugriffsprüfung auf geschützte Daten.US 2013/205 134 A1 beschreibt
Verfahren und Vorrichtungen zur Zugriffsprüfung auf geschützte Daten.

Ausgehend davon liegt der Erfindung die Aufgabe zugrunde, ein einfaches, sicheres und schnelles Verfahren zum Entsperren eines mobilen Endgeräts anzugeben.

Diese Aufgabe wird durch die Merkmale des unabhängigen Anspruchs gelöst. Weiterbildungen der Erfindung sind Gegenstand der abhängigen Ansprüche.

Die Erfindung schafft ein Verfahren zum Entsperren eines nahbereichskommunikationsfähigen mobilen Endgerätes durch einen Server, wobei das mobile Endgerät eine gesicherte Laufzeitumgebung
umfasst. Bei dem Verfahren wird
- eine Nahbereichskommunikationsverbindung zwischen dem mobilen Endgerät und einem nahbereichskommunikationsfähigen Terminal hergestellt und über die Nahbereichskommunikationsverbindung eine eindeutige Kennung des mobilen Endgeräts an das nahbereichskommunikationsfähigen Terminal übertragen;
- wird eine Kommunikationsverbindung zwischen dem nahbereichskommunikationsfähigen Terminal und dem Server hergestellt und die eindeutige Kennung über die Kommunikationsverbindung an den Server übertragen;
- wird ein Entsperrcode von dem Server über die Kommunikationsverbindung an das nahbereichskommunikationsfähigen Terminal übertragen, und
- wird Entsperrcode über die Nahbereichskommunikationsverbindung in die gesicherte Laufzeitumgebung des mobilen Endgeräts übertragen.

Bei einem Endgerät im Sinn der Erfindung handelt es sich prinzipiell um ein Gerät oder eine Gerätekomponente, welches Mittel zur Kommunikation mit und/ oder über einem Kommunikationsnetzwerk, insbesondere Mobilfunknetzwerk, aufweist, um Dienste des Kommunikationsnetzes nutzen zu können. Beispielsweise ist ein Mobiltelefon, Smart Phone, ein Tablet-PC, ein Notebook oder ein PDA unter dem Begriff eines mobilen Endgeräts zu fassen. Unter dem mobilen Endgerät können beispielsweise auch Multimediaendgeräte wie digitale Bilderrahmen, Audiogeräte, Fernsehgeräte, E-Book-Reader verstanden werden, die ebenfalls Mittel zur Kommunikation mit dem Kommunikationsnetzwerk aufweisen. Beispielsweise umfasst der Begriff Endgeräte auch jegliche Art von Maschinen, Automaten, Fahrzeuge, Einrichtungen welche Mittel, insbesondere Mobilfunkmodems, zur Kommunikation mit dem Kommunikationsnetzwerk aufweisen.

Bei einem Teilnehmeridentitätsmodul im Sinne der Erfindung handelt es sich um ein Sicherheitsmodul, insbesondere um ein in Baugröße und Ressourcenumfang reduziertes Modul, welches einen Mikrocontroller und mindestens eine Datenschnittstelle zur Kommunikation mit einem Endgerät aufweist. Dieses Teilnehmeridentitätsmodul weist einen sicheren Speicherbereich auf, indem die Teilnehmeridentitätsdaten sicher eingebracht sind, um Manipulations- und/oder Missbrauchsversuche bei der Identifizierung und/ oder Authentisierung am Kommunikationsnetzwerk zu verhindern. Das Teilnehmeridentitätsmodul ist mittels des Endgeräts betriebsfähig.

Bei dem Teilnehmeridentitätsmodul handelt es sich beispielsweise um eine Chipkarte, auch Universal Integrated Circuit Card (UICC) oder SIM-Karte bzw. USIM. Das Teilnehmeridentitätsmodul weist zur Verwendung in Verbindung mit einem mobilen Funknetz auf einem Chip gespeicherte maschinenlesbare Teilnehmeridentifikationsdaten eines Teilnehmers auf. Das Teilnehmeridentitätsmodul kann auch als Smartcard, Massenspeicherkarte, USB-Token, Multimediakarte, Secure Micro SD-Karte, Mobilfunknetztoken, z.B. UMTS-Surfstick und/oder elektronisches Identifikationsdokument, ausgebildet sein. Das Teilnehmeridentitätsmodul ist als vom mobilen Endgerät entnehmbares Modul ausgebildet. Derartige Teilnehmeridentifikationsmodule werden mittels Kartenleseeinheiten in einem Endgerät betrieben und sind insbesondere dafür vorgesehen, aus dem Endgerät zum Zweck eines Austauschs oder der Verwendung in einem zweiten Endgerät entnommen werden zu können.

Alternativ handelt es sich bei dem Teilnehmeridentitätsmodul um einen integralen Bestandteil innerhalb des Endgeräts, beispielsweise eines fest verdrahteten elektronischen Bausteins. Derartige Teilnehmeridentitätsmodule werden auch als embedded UICC (eUICC) bezeichnet. In dieser Bauform sind diese Teilnehmeridentitätsmodule nicht für eine Entnahme aus dem Endgerät vorgesehen und können prinzipiell nicht einfach ausgetauscht werden. Derartige Teilnehmeridentitätsmodule können auch als embedded Secure Elements, also als eine sichere Hardwarekomponente im Endgerät ausgestaltet sein.

Das Teilnehmeridentitätsmodul kann ein Machine-to-Machine-, kurz M2M-, Modul sein. Es kann ein Co-Prozessor, Trusted Base Modul oder Trusted Platform Modul sein. Das Teilnehmeridentitätsmodul kann zur Fernüberwachung, -kontrolle und -wartung von Endgeräten wie Maschinen, Anlagen und Systemen eingesetzt werden. Sie können alternativ auch für Zähleinheiten wie Stromzähler, Warmwasserzähler verwendet werden.

Alternativ ist das Teilnehmeridentitätsmodul als eine Softwarekomponente in einem vertrauenswürdigen Teil eines Betriebssystems, einer sogenannten Trusted Execution Environment (TEE) des Endgerätes ausgebildet. Das Teilnehmeridentitätsmodul ist dann beispielsweise innerhalb einer gesicherten Laufzeitumgebung in Form von darin ablaufenden Programmen, sogenannten Trustlets ausgebildet.

Teilnehmeridentitätsdaten im Sinn der Erfindung sind zum Einen Daten, die einen Teilnehmer eindeutig im Kommunikationsnetz identifizieren, beispielsweise eine International Mobile Subscriber Identity (IMSI) und/oder teilnehmerspezifische Daten. Zum Anderen können die Teilnehmeridentitätsdaten Daten sein, die einen Teilnehmer eindeutig am Kommunikationsnetz authentisieren, beispielsweise ein Authentisierungsalgorithmus, spezifische Algorithmusparameter, ein kryptografischer Authentisierungsschlüssel oder ein kryptografischer Over-The-Air (OTA) Schlüssel sein.

Nachfolgend wird der Begriff SIM-Karte stellvertretend für alle Teilnehmeridentitätsmodule verwendet.

Ein Kommunikationsnetzwerk im Sinn der Erfindung ist eine technische Einrichtung, auf der die Übertragung von Signalen unter Identifizierung und/oder Authentisierung des Kommunikationsteilnehmers stattfindet, wodurch Dienste angeboten werden. Insbesondere wird in dieser Erfindung ein Mobilfunknetz beispielsweise das "Global System for Mobile Communications", kurz GSM als Vertreter der zweiten Generation oder das "General Packet Radio Service", kurz GPRS bzw. "Universal Mobile Telecommunications System", kurz UMTS als Vertreter der dritten Generation oder das "Long Term Evolution", kurz LTE, als Vertreter der vierten Generation als Mobilfunknetz verstanden.

Mobile Endgeräte weisen zunehmend Kommunikationsschnittstellen bzw. Kommunikationseinheiten für die kontaktlose Nahbereichskommunikation auf. Insbesondere kommen zur Nahbereichskommunikation eine Nahfeldkommunikation (Near Field Communication, NFC), welche beispielsweise durch ISO 14443 sowie ETSI TS 102 190 genormt ist, oder Bluetooth in Betracht. Eine Kommunikation zwischen dem mobilen Endgerät und einem entsprechenden Lesegerät erfolgt vorzugsweise lediglich über kürzeste Distanzen von weniger als etwa 10 cm.

Zudem enthalten die mobilen Endgeräte einen Mikroprozessor-Chip, durch den elektronische Funktionalitäten des Endgeräts bereitgestellt werden. Im Chip ist unter anderem zumindest ein Betriebssystem implementiert. Unter der Bezeichnung Trustzone Architektur ist eine zweigeteilte Laufzeit-Architektur für ein Mikroprozessorsystem des mobilen Endgeräts bekannt, die zwei Laufzeitumgebungen bzw. zwei Zonen umfasst. Eine erste, "Normal Zone" oder "Normal World" genannte unsichere Laufzeitumgebung ist durch ein Normalbetriebssystem, wie etwa Android, Windows Phone, Symbian oder dergleichen, gesteuert.

Eine zweite Zone, auch "Trustzone", "Trusted World", "Secure World", oder "Trusted Execution Environment TEE" genannte gesicherte oder vertrauenswürdige Laufzeitumgebung, ist durch ein Sicherheitsbetriebssystem gesteuert. Applikationen unter dem Sicherheitsbetriebssystem werden dabei in der Regel als Trustlets® bezeichnet. Die TEE umfasst besonders betriebs- und sicherheitssensible Prozesse und Daten, beispielsweise Benutzeridentifikationsdaten, Geräteidentifikationsdaten, Sperrinformationen und/ oder Netzdaten. Beispielsweise kann ein virtuelles Teilnehmeridentifikationsmodul in die TEE implementiert sein. Die TEE ist durch Global Platform spezifiziert. In einer Besonderheit kann das Teilnehmeridentitätsmodul in der TEE implementiert sein.

Die Verwaltung der Inhalte der gesicherten Laufzeitumgebung eines mobilen Endgeräts erfolgt in der Regel über eine kryptographisch abgesicherte Infrastruktur durch einem sogenannten Trusted Service Manager TSM. Der TSM ist in der Regel unabhängig vom Herausgeber und Inhaber des mobilen Endgeräts und/ oder des Teilnehmeridentitätsmoduls, vorzugsweise ein externer Dienstleister. Der Dienste des TSM können jedoch vom Herausgeber des mobilen Endgeräts oder einem Betreiber eines Kommunikationsnetzwerkes übernommen und/ oder gesteuert werden. Für einen Zugriff auf die TEE ist auf dem mobilen Endgerät, vorzugsweise in der normalen Zone, eine Schnittstelle vorgesehen, sodass der TSM, beispielsweise mittels einer Browserapplikation, auf Inhalte des TEE zugreifen kann.

Vorliegend werden die Fähigkeiten des mobilen Endgeräts kombiniert, um über eine Nahbereichskommunikationsverbindung eine eindeutige Kennung, vorzugsweise des mobilen Geräts, an ein nahbereichskommunikationsfähiges Terminal zu übertragen. Die eindeutige Kennung wird dabei vorteilhaft aus der gesicherten Laufzeitumgebung TEE ausgelesen.

Das nahbereichskommunikationsfähiges Terminal überträgt die eindeutige Kennung über eine Kommunikationsverbindung, insbesondere eine Internetverbindung, an den Server, der Dienste des TSM ausführt. Diese Dienste können aktiv sein, beispielsweise Anwendungen, welche auf die TEE des mobilen Endgeräts zugreifen, oder passiv sein, beispielsweise Codes, welche Informationen zum Einbinden in die TEE darstellen.

Die Kommunikationsverbindung zwischen dem nahbereichskommunikationsfähiges Terminal und dem Server wurde dabei mit Vorteil bereits im Vorfeld hergestellt, so dass für den Verbindungsaufbau bei der Entsperrung keine Zeit verloren geht. In einem Ladengeschäft kann diese Kommunikationsverbindung beispielsweise während der gesamten Öffnungszeit aufrecht erhalten sein. Alternativ kann die Kommunikationsverbindung auch erst aus Anlass der Entsperrung des Endgeräts aufgebaut werden.

Der Server erzeugt, zweckmäßig nach erfolgreicher Prüfung der übertragenen eindeutigen Kennung, einen Entsperrcode und überträgt diesen über die Kommunikationsverbindung zurück an das nahbereichskommunikationsfähiges Terminal. Von dort wird der Entsperrcode über die Nahbereichskommunikationsverbindung -Verbindung in die gesicherte Laufzeitumgebung des mobilen Endgeräts übertragen.

Der Entsperrcode kann als personalisierter Entsperrcode ausgeführt sein. Dabei erstellt vorzugsweise der TSM bzw. der Server entsprechend der eindeutigen Kennung den Entsperrcode. Der Entsperrcode ist vorzugsweise nur für die TEE des mobilen Endgeräts einsetzbar. Alternativ kann der Entsperrcode allgemeiner Natur sein, d.h. dass der Entsperrcode auf einer Vielzahl an mobilen Endgeräten einsetzbar ist.

Mit dem aufgezeigten Verfahren ist es möglich, ein mobiles Endgerät beispielsweise beim Kauf im Ladengeschäft zu entsperren, ohne dass das mobile Endgerät eine insbesondere Online-Verbindung, zu einem TSM und/oder Mobilfunkprovider herstellen muss. Somit ist es nicht notwendig, zumindest temporär, am Beispiel eines Mobiltelefons, dieses mit einer SIM-Karte oder einer Teilnehmeridentität zur Datennutzung zu versehen. Ein Öffnen des mobilen Endgeräts und/oder eine Konfiguration zu bestimmten Teilnehmeridentitäten, Providerdaten und/ oder Netzwerkdaten sind nicht notwendig.

Das Entsperren des mobilen Endgeräts ist einfach, schnell und für einen TSM bzw. Herausgeber des mobilen Endgeräts überwachbar. Ein unberechtigtes Entsperren, durch beispielsweise einen Nutzer, des mobilen Endgeräts, wird aufgrund der gesicherten Zone wirksam verhindert. Der Konfigurationsaufwand und möglicherweise eine Beschädigung des mobilen Endgeräts verhindert. Daten zum WLAN des Ladengeschäfts werden nicht an Dritte weitergegeben; das WLAN ist sicher.

Es kann vorgesehen sein, dass eine Applikation in der TEE die Funktion einer Sperrapplikation, z. B. SIM-Sperre, aufweist. Diese Sperrapplikation wird in der TEE ausgeführt. Das Betriebssystem der TEE ruft diese Sperrapplikation beispielsweise bei einem Neustart auf, um sicherzustellen, welche Betriebsparameter und Betriebskomponenten freigeschalten sind. Diese Betriebsparameter sind vorzugsweise eine Bindung des mobilen Endgeräts an ein vorgegebenes Teilnehmeridentitätsmodul. Dazu kann eine Identität zu dem vorgegebenen Teilnehmeridentitätsmodul hinterlegt sein. Beispielsweise ein Merker kann der Sperrapplikation anzeigen, ob sie die Identität prüfen soll. Ist beispielsweise der Merker gesetzt, wird der Applikation angezeigt, dass die Identität geprüft werden muss. Das mobile Endgerät ist nur mit dem vorgegebenen Teilnehmeridentitätsmodul verwendbar, z.B. SIM-Lock.

Wäre der Merker nicht gesetzt, ist eine Prüfung nicht notwendig. Das mobile Endgerät ist mit jedem Teilnehmeridentitätsmodul betreibbar. Der Entsperrcode könnte entsprechend den Merker nicht setzen, z.B. binär "0", sodass eine Prüfung auf eine Identität des Teilnehmeridentitätsmoduls nicht mehr veranlasst wird.

Die Sperrapplikation könnte in einer Ausführungsform auf eine Liste zugreifen, in der die Identität des vorgegebenen Teilnehmeridentitätsmoduls eingetragen ist. Der Entsperrcode könnte die Liste erweitern bzw. ändern, so dass zusätzlich wenigstens eine weitere Identität freigegeben ist. Insbesondere könnte der Entsperrcode eine Identität sein, welche für die Prüfung durch die Applikation zumindest teilweise eine Trunkierung aufweist. Das mobile Endgerät ist für eine Vielzahl von Teilnehmeridentitätsmodulen freigegeben (entsperrt).

Bei dem Entsperrcode kann es sich um eine Freigabeapplikation handeln. Vorzugsweise wird die Freigabeapplikation als Update der in der TEE lauffähigen Sperrapplikation im mobilen Endgerät geladen. Die Freigabeapplikation umfasst einen Code, welcher die Sperre des mobilen Endgeräts, vorzugsweise die Bindung des mobilen Endgeräts an eine Hardwarekomponente, z.B. SIM-Karte, übergeht bzw. aufhebt. Alternativ kann der Entsperrcode ein Programmcode sein, der in die Sperrapplikation eingetragen wird. Der geänderte Programmcode bewirkt entsprechend eine Freigabe des mobilen Endgeräts.

Anstatt eines Updates ersetzt vorzugsweise die Freigabeapplikation die in der TEE lauffähige Sperrapplikation durch eine Freigabeapplikation.

Vorzugsweise gibt die Sperrapplikation nach Übertragen des Entsperrcodes in die TEE einen Dienst des mobilen Endgeräts auf eine Hardwarekomponente frei. Die Sperrapplikation kann die Dienstleistung einer Netzanwahl, d.h. das Einbuchen des Teilnehmeridentifikationsmoduls bzw. des mobilen Endgeräts in ein Kommunikationsnetzwerk, freigeben. Mithilfe des Entsperrcodes gibt somit die Sperrapplikation das mobile Endgerät bezüglich einer Funktion und/oder einer Hardwarekomponente frei, beispielsweise Kommunikationsschnittstellen, wie z.B. Bluetooth, Infrarotschnittstelle oder USB, Kamera, Radio, Displayeigenschaften und/ oder Tastatur. Außerdem könnten Softwaredienste, beispielsweise Applikationen und/ oder Browser, freigegeben werden. Insbesondere kann mithilfe der Sperrapplikation gezielt eine Bindung des mobilen Endgeräts auf eine Hardwarekomponente, z.B. SIM-Karte, freigegeben und/ oder gesperrt werden.

Der Entsperrcode kann die Sperrapplikation derart beeinflussen, um eine Freigabe bzw. ein Entsperren des mobilen Endgeräts zu erwirken. Es ist somit möglich, dass beispielsweise in einem Ladengeschäft Premiumdienste freigeschaltet werden, ohne dass ein Benutzer des mobilen Endgeräts aufwändig selbst eine Verbindung zu einem Serviceprovider aufbauen muss. Beispielsweise ist als Premiumdienst die Nutzung von Kommunikationsschnittstellen, z.B. Bluetooth, oder GPS zu verstehen. Weiterhin können Softwaremodule, beispielsweise Bezahllösungen, freigeschaltet werden.

Vorzugsweise wird nach Übertragung des Freigabecodes auf das mobile Endgerät die Sperrapplikation neu gestartet und das mobile Endgerät entsperrt. Alternativ kann die Sperrapplikation nach einem Neustart des mobilen Endgeräts während des Bootvorgangs gestartet werden.

In einer Ausführungsform handelt es sich bei der eindeutigen Kennung um eine Kennung des mobilen Endgeräts, Teilnehmeridentifikationsdaten und/ oder die Identifikation des Teilnehmeridentifikationsmoduls.

Mithilfe der Erfindung kann das mobile Endgerät sicher und schnell entsperrt werden, ohne dass ein Öffnen des Endgeräts und/oder eine umständliche Konfiguration erforderlich wäre.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:
- Fig. 1: eine schematische Darstellung der bei einem erfindungsgemäßen Verfahren beteiligten Elemente, und
- Fig. 2: eine Darstellung des Ablaufs bei der Entsperrung eines mobilen Endgeräts nach einem erfindungsgemäßen Verfahren.

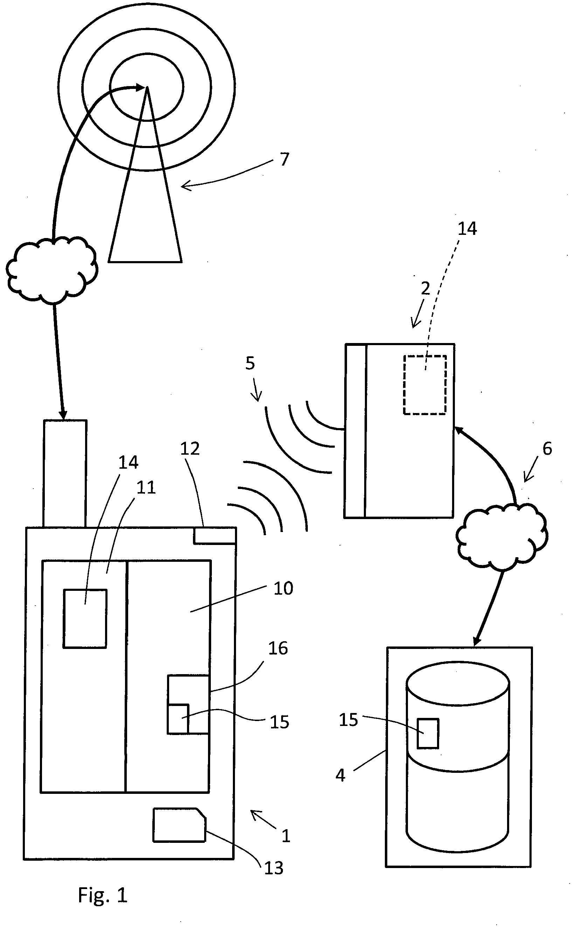

Zur weiteren Erläuterung der Erfindung zeigt Fig. 1 ein mobiles Endgerät 1 (mobile entity, ME) mit einer gesicherten Laufzeitumgebung 10 (TEE, trusted execution environment), das ein gesichertes Betriebssystem umfasst. Weiterhin weist das mobile Endgerät 1 eine offene Laufzeitumgebung 11 auf, auf dem beispielsweise ein offenes Betriebssystem z.B. Android, läuft. Das mobile Endgerät 1 enthält auch eine Nahbereichs-Kommunikationseinheit 12 bzw. Kommunikationsschnittstelle, die im vorliegenden Beispiel eine kontaktlose Nahfeldkommunikation (NFC) 5 mit einem entsprechenden NFCfähigen Terminal 2 ermöglicht. Weiterhin weist das mobile Endgerät 1 eine Antenne zur Kommunikation mit einem Kommunikationsnetzwerk, nämlich vorliegend mit einem GSM-Mobilfunknetzwerk 7, auf.

Das mobile Endgerät 1 weist im Auslieferungszustand eine Sperrapplikation auf, nämlich eine SIM-Sperre 16, die die Nutzbarkeit des mobilen Endgeräts 1 auf bestimmte SIM-Karten 13 beschränkt. Beim Kauf des mobilen Endgeräts 1 soll die Möglichkeit bestehen, das mobile Endgeräts 1 vorzugsweise im Ladengeschäft zu entsperren und für alle SIM-Karten 13 freizugeben.

Um die SIM-Sperre des mobilen Endgeräts 1 einfach, sicher und schnell zu deaktivieren, stellt der Händler das NFC-fähiges Terminal 2 bereit, das eine Onlineverbindung 6 mit einem Trusted Service Manager 4 (TSM) unterhält. Der TSM 4 ist ein Dienstleister zur Verwaltung von Inhalten in dem TEE 10.

Eine Entsperranwendung 14 zum Entsperren des mobilen Endgeräts 1 wird gestartet. Die Entsperranwendung 14 kann auf dem mobilen Endgerät 1, beispielsweise als browserbasierte Anwendung, auf dem Terminal 2 (gestrichelt dargestellt) oder auf einem Hintergrundsystem, das mit dem Terminal 2 verbunden ist, ausgeführt werden. Die Entsperranwendung 14 schaltet, sofern noch nicht geschehen, eine Nahbereichs-Kommunikationseinheit 12 des mobilen Endgeräts 1 ein. Das mobile Endgerät wird auf das NFC-Terminal 2 gelegt, wodurch eine Nahfeldkommunikationsverbindung 5 zwischen dem mobilen Endgerät 1 und dem NFC-Terminal 2 hergestellt wird.

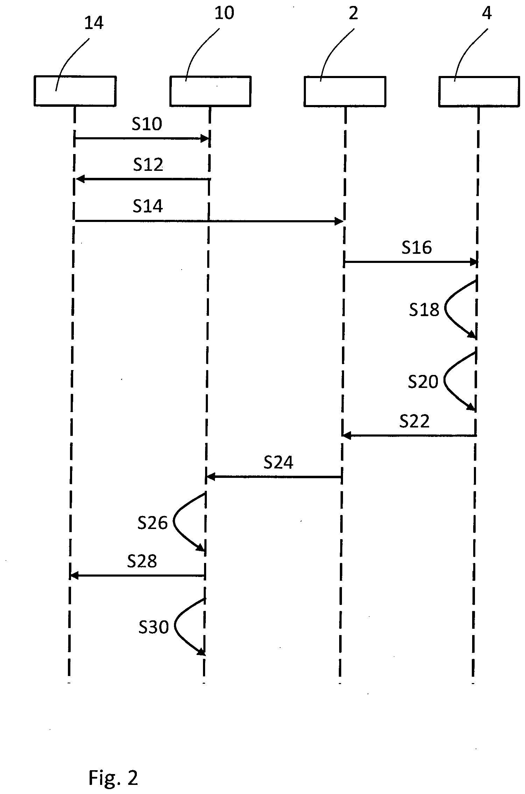

In einem Schritt S10 (Fig. 2) fordert die Entsperranwendung 14 von der TEE 10 des mobilen Endgeräts 1 die Identifikation des mobilen Endgeräts 1 (SUID, Secure Unique Identifier) an, welche in Schritt S12 von der Laufzeitumgebung TEE an die Entsperranwendung 14, in Schritt S14 von dieser über die NFC-Verbindung 5 an das NFC-Terminal 2, und schließlich in Schritt S16 von dem NFC-Terminal 2 über eine Onlineverbindung 6, insbesondere Internet, an den TSM 4 übertragen wird.

Der TSM 4 prüft in Schritt S18 die übertragene SUID und stellt im Erfolgsfall in Schritt S20 als Entsperrcode ein Unlock-Trustlet 15 für die Laufzeitumgebung TEE 10 des mobilen Endgeräts 1 bereit.

Das Unlock-Trustlet 15 wird in Schritt S22 über die Onlineverbindung 6 an das NFC-Terminal 2 und nach einer optionalen Bestätigung in Schritt S24 von diesem an das TEE 10 des mobilen Endgeräts 1 übertragen. In Schritt S26 wird das Unlock-Trustlet 15 in der Laufzeitumgebung TEE 10 des mobilen Endgeräts 1 installiert. In Schritt S28 erfolgt von der TEE 10 eine Rückmeldung über die erfolgreiche Installation Entsperranwendung 14, wodurch der Benutzer über das erfolgreiche Entsperren informiert wird. Nach einem Neustart des mobilen Endgeräts 1 prüft in Schritt S30 die SIM-Sperre 16 im TEE 10, ob das Unlock-Trustlet 15 vorhanden ist. Nach der Übertragung im Schritt S24 und der Installation im Schritt S26 ist das Unlock-Trustlet 15 im TEE 10 gespeichert. Die SIM-Sperre 16 erkennt das Unlock-Trustlet 15. Wie gewünscht kann das mobile Endgerät 1 mit jeder SIM-Karte 13 betrieben werden.

Das vorangestellte Beispiel ist zur Freigabe des mobilen Endgeräts 1 hinsichtlich einer SIM-Sperre 16 beschrieben. Selbstverständlich kann die Erfindung sinngemäß zur Freigabe des mobilen Endgeräts 1 gegenüber einer anderen Hard- und Softwarebindung, beispielsweise mit dem mobilen Endgerät 1 verbundene Komponenten, wie Tastatur oder Kopfhörer, eingesetzt werden.

## Patentansprüche

1. Verfahren zum Entsperren eines nahbereichskommunikationsfähigen mobilen Endgerätes (1) durch einen Server (4), wobei das mobile Endgerät (1) eine gesicherte Laufzeitumgebung (10) umfasst und bei dem Verfahren
- eine Nahbereichskommunikationsverbindung (5) zwischen dem mobilen Endgerät (1) und einem Terminal (2) hergestellt wird und über die Nahbereichskommunikationsverbindung (5) eine eindeutige Kennung an das Terminal (2) übertragen wird (S14);
- eine Kommunikationsverbindung zwischen dem Terminal (2) und dem Server (4) hergestellt wird, und die eindeutige Kennung über die Kommunikationsverbindung an den Server (4) übertragen wird (S16);
- ein Entsperrcode (15) von dem Server (4) über die Kommunikationsverbindung an das Terminal (2) übertragen wird (S22), und
- der Entsperrcode (15) über die Nahbereichskommunikationsverbindung (5) in die gesicherte Laufzeitumgebung (10) des mobilen Endgeräts (1) übertragen wird (S24),
wobei die Nahbereichskommunikationsverbindung (5) kontaktlos über eine Nahfeldkommunikation, NFC, und/oder über Bluetooth hergestellt wird,
wobei eine Applikation in der gesicherten Laufzeitumgebung (10) auf den Entsperrcode (15) zugreift,
**dadurch gekennzeichnet, dass** die Applikation mit dem Entsperrcode (15) vom Server (4) in die gesicherte Laufzeitumgebung (10) des mobilen Endgeräts (1) übertragen wird (S24),
wobei die Applikation den Entsperrcode (15) prüft und entsprechend dem Prüfergebnis das Endgerät (1) entsperrt (S30),
wobei die Applikation das Endgerät (1) in Bezug auf eine Hardwarekomponente entsperrt (S30),
wobei beim Übertragen (S24) des Entsperrcodes (15) in die gesicherte Laufzeitumgebung (10) des mobilen Endgeräts (1) der Entsperrcode (15) in die Applikation eingetragen wird.

2. Verfahren nach Anspruch 1, **dadurch gekennzeichnet, dass** die Applikation nach der Übertragung (S24) des Entsperrcodes (16) gestartet wird und das mobile Endgerät (1) entsperrt.

3. Verfahren nach einem der Ansprüche 1 bis 2, **dadurch gekennzeichnet, dass** die Applikation nach einem Neustart des mobilen Endgeräts (1) während dessen Bootvorgang gestartet wird.

4. Verfahren nach einem der vorhergehenden Ansprüche, **dadurch gekennzeichnet, dass** die eindeutige Kennung aus der gesicherten Laufzeitumgebung (10) ausgelesen wird (S10).

5. Verfahren nach einem der vorhergehenden Ansprüche, **dadurch gekennzeichnet, dass** die eindeutige Kennung eine eindeutige Kennung des mobilen Endgeräts (1) und/ oder eine Teilnehmeridentifikation ist.

6. Verfahren nach einem der vorhergehenden Ansprüche, **dadurch gekennzeichnet, dass** vor dem Verbinden des mobilen Endgeräts (1) mit dem Terminal (2) eine Entsperranwendung (14) auf dem mobilen Endgerät (1), auf dem Terminal (2) und/oder auf einem Hintergrundsystem, insbesondere dem Server, gestartet wird.

## Claims

1. A method for unlocking a close-range communication-capable mobile end device (1) by a server (4), wherein the mobile end device (1) comprises a secure runtime environment (10) and in the method
- a close-range communication connection (5) is established between the mobile end device (1) and a terminal (2) and via the close-range communication connection (5) an unambiguous identifier is transferred (S14) to the terminal (2);
- a communication connection is established between the terminal (2) and the server (4), and the unambiguous identifier is transferred (S16) via the communication connection to the server (4);
- an unlock code (15) is transferred (S22) from the server (4) via the communication connection to the terminal (2), and
- the unlock code (15) is transferred (S24) via close-range communication connection (5) into the secure runtime environment (10) of the mobile end device (1), wherein the close-range communication connection (5) is established contactlessly via a near-field communication, NFC, and/or Bluetooth, wherein an application accesses the unlock code (15) in the secure runtime environment (10),
**characterized in that** the application having the unlock code (15) is transferred (S24) from the server (4) into the secure runtime environment (10) of the mobile end device (1),
wherein the application checks the unlock code (15) and unlocks (S30) the end device (1) corresponding to the check result,
wherein the application unlocks (S30) the end device (1) with regard to a hardware component,
wherein upon transferring (S24) the unlock code (15) into the secure runtime environment (10) of the mobile end device (1), the unlock code (15) is entered into the application.

2. The method according to claim 1, **characterized in that** the application is started after the transferring (S24) of the unlock code (16) and unlocks the mobile end device (1).

3. The method according to any of claims 1 to 2, **characterized in that** the application is started after a restart of the mobile end device (1) during its booting procedure.

4. The method according to any of the preceding claims, **characterized in that** the unambiguous identifier is read out (S10) from the secure runtime environment (10).

5. The method according to any of the preceding claims, **characterized in that** the unambiguous identifier is an unambiguous identifier of the mobile end device (1) and/or a subscriber identification.

6. The method according to any of the preceding claims, **characterized in that** before the connecting of the mobile end device (1) to the terminal (2), an unlock application (14) is started on the mobile end device (1), on the terminal (2) and/or on a background system, in particular the server.

## Revendications

1. Procédé de déverrouillage d'un appareil terminal (1) mobile apte à la communication à courte portée, par un serveur (4), cependant que l'appareil terminal (1) mobile comprend un environnement d'exécution sécurisé (10), et que, dans le procédé,
- une connexion de communication à courte portée (5) entre l'appareil terminal (1) mobile et un terminal (2) est établie, et que, par l'intermédiaire de la connexion de communication à courte portée (5), un identifiant univoque est transmis (S14) au terminal (2) ;
- une connexion de communication entre le terminal (2) et le serveur (4) est établie, et que l'identifiant univoque est transmis (S16) au serveur (4) par l'intermédiaire de la connexion de communication ;
- un code de déverrouillage (15) est transmis (S22) du serveur (4) au terminal (2) par l'intermédiaire de la connexion de communication, et
- le code de déverrouillage (15) est transmis (S24) par l'intermédiaire de la connexion de communication à courte portée (5) dans l'environnement d'exécution sécurisé (10) de l'appareil terminal (1) mobile, cependant que la connexion de communication à courte portée (5) est établie sans contact par l'intermédiaire d'une communication en champ proche, NFC, et/ou par l'intermédiaire de Bluetooth,
cependant qu'une application, dans l'environnement d'exécution sécurisé (10), accède au code de déverrouillage (15),
**caractérisé en ce que** l'application est transmise (S24) avec le code de déverrouillage (15) du serveur (4) dans l'environnement d'exécution sécurisé (10) de l'appareil terminal (1) mobile, cependant que l'application vérifie le code de déverrouillage (15) et déverrouille (S30) l'appareil terminal (1) en fonction du résultat de la vérification,
cependant que l'application déverrouille (S30) l'appareil terminal (1) en ce qui concerne un composant matériel,
cependant que, lors de la transmission (S24) du code de déverrouillage (15) dans l'environnement d'exécution sécurisé (10) de l'appareil terminal (1) mobile, le code de déverrouillage (15) est enregistré dans l'application.

2. Procédé selon la revendication 1, **caractérisé en ce que** l'application est démarrée après la transmission (S24) du code de déverrouillage (16) et déverrouille l'appareil terminal (1) mobile.

3. Procédé selon une des revendications de 1 à 2, **caractérisé en ce que** l'application est démarrée après un redémarrage de l'appareil terminal (1) mobile durant son processus de boot.

4. Procédé selon une des revendications précédentes, **caractérisé en ce que** l'identifiant univoque est lu (S10) depuis l'environnement d'exécution sécurisé (10).

5. Procédé selon une des revendications précédentes, **caractérisé en ce que** l'identifiant univoque est un identifiant univoque de l'appareil terminal (1) mobile et/ou une identification d'abonné.

6. Procédé selon une des revendications précédentes, **caractérisé en ce que,** avant la connexion de l'appareil terminal (1) mobile avec le terminal (2), une application de déverrouillage (14) est démarrée sur l'appareil terminal (1) mobile, sur le terminal (2) et/ou sur un système d'arrière-plan, en particulier sur le serveur.
